# EUROPEAN PATENT SPECIFICATION

(11) **EP 3 044 391 B1**
(45) Date of publication and mention of the grant of the patent: **05.12.2018**
(21) Application number: 14814712.7
(22) Date of filing: 11.09.2014
(51) Int. Cl.: E04C 2/34, E04D 3/35

(54) **A MULTI-PURPOSE CHANNEL FOR ROOF OR FACADE PANELS**
MEHRZWECKKANAL FÜR DACH- ODER FASSADEPLATTEN
CONDUIT POLYVALENT POUR PANNEAUX DE TOITURE ET DE FAÇADE

(30) Priority: 12.09.2013 TR 201310779
(43) Date of publication of application: 20.07.2016
(73) Proprietor: Pekel, Cüneyt, 19040 Istanbul (TR)
(72) Inventor: Pekel, Cüneyt, 19040 Istanbul (TR)
(74) Representative: Dericioglu Kurt, Ekin
(86) International application number: PCT/TR2014/000335
(87) International publication number: WO 2015/038083

(56) References cited:
- WO-A1-2007/086737
- DE-A1- 19 914 451
- GB-A- 2 439 191
- US-A- 3 583 123
- US-A1- 2005 074 587

## Description

### Field of the Invention

The present invention relates to one or a plurality of multi-purpose channels to be used in panels as facing material or dividing wall.

### Background of the Invention

The panels mentioned here and used as roof and facing material were defined in TS EN 14509: 2009 published on March 2010 with the name of Self-Carrying Double Sided Metal Coating Insulation Panels-Manufactured in Factory by TSE. These panels are formed by adhering polyurethane or its equivalent injected between to appropriately formed two metals (mostly painted galvanized sheet plate or aluminum) in a suitable thickness to the metal surfaces below and above after formed in a desired thickness, or hot adhesion of rock wool or its equivalent put in these lower and upper metals according to its technique to these metals tightly.

The panels of the invention exhibit a composite behavior such that they will have a higher load carrying capacity than the total load carry capacities of three components (upper metal+ heat insulation material+ lower metal) separately in this state. They are manufactured in width of approximately 1 meter and in length of up to 12 meters depending on orders or longer in the factories in continuous lines. There are 2, 3, 4 or more gutters on the upper metal in order to reinforce carrying capacity in roof panels, the lower metal is flat such that it will include small gutters which provide surface strength and are not deep. Both upper and lower metals of the facade panel are manufactured flatly comprising small gutters which are not deep in order to provide surface strength. Facade panels can sometimes be used as facing coating as well as being used as interior dividing wall. The panels can be used horizontal or vertical in facades of the buildings.

In interiors of the buildings the roofs and facades of which are coated with these panels, solutions requiring additional time, material, labor and cost are required for cabling for fire extinguishing, cooling, heating, air conditioning, acoustic needs or audio, light, visual, information and electrical purposes, and mostly they also cause visual pollution.

On the other hand, when polyurethane based thermal insulation material forms the internal thickness of the panel, the panels do not have sufficient strength against many high qualities of the polyurethane such as high thermal insulation, strong adhesion and like.

### Summary of the Invention

The objective of the present invention is to provide one or more channels inside the panel thickness, which become a part of the systems required to be mounted
- for the solution of the requirements of
- fire extinguishing,
- providing resistance against fire,
- heating, cooling, air conditioning,
- acoustic and decorative,
- cabling which provides audio, light, visual, information and electrical conduction;
or which will allow passage of the assembly related with these therein or placement of materials having high fire resistance therein.

Therefore, a ready to use solution will be provided which can be used as multipurpose without creating visual pollution and requiring an additional effort and cost for needs mentioned above in interiors of the buildings coated with the roof, facade panels disclosed here.

### Description of the Figures

Figure 1 is the perspective view of the usage of roof, facade panels in a building.

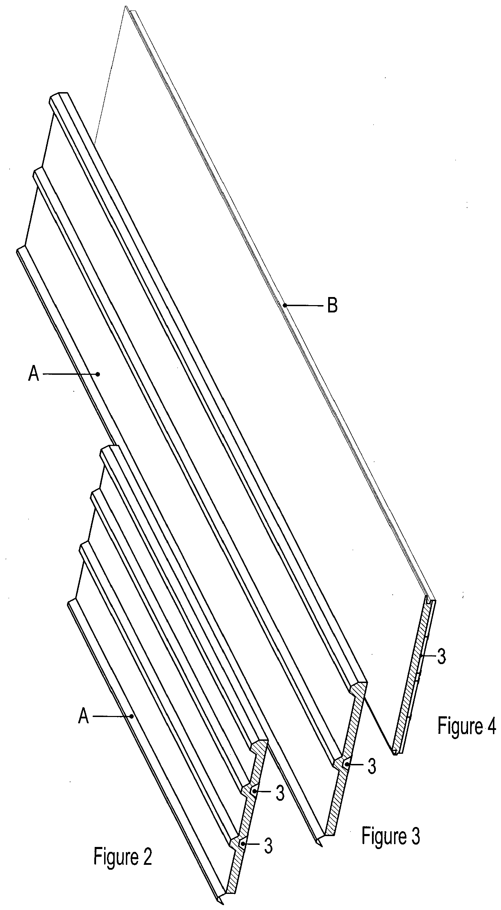

Figure 2 is the perspective view of the roof panel with four gutters.
Figure 3 is the perspective view of the roof panel with three gutters.
Figure 4 is the perspective view of the facade panel.
Figure 5 is the view of 1 channel in transverse cross sectional drawing of the roof panel with three gutters.
Figure 6 is the view of 2 channels in transverse cross sectional drawing of the roof panel with four gutters.
Figure 7 is the view of 3 channels in transverse cross sectional drawing of the roof panel with five gutters.
Figure 8 is the view of attached channels next to each other in transverse cross sectional drawing of the roof panel with four gutters.
Figure 9 is the view of attached channels next to each other in transverse cross sectional drawing of the facade panel.
Figure 10 is the detailed cross sectional view of a channel corresponding under the gutter in a roof panel.
Figure 11 is the detailed cross sectional view of attached channels next to each other in a facade panel.
Figure 12 is the various examples for channel forms and applications.
Figure 13 is the detailed perspective view of a channel corresponding under the gutter in a roof panel and the assembly passing therein.
Figure 14 is the detailed perspective view of attached channels next to each other in a facade panel.

1. Panel upper metal
   11. Gutter
2. Thermal insulation material
3. Channel
   31. Channel upper metal
   32. Assembly passing through the channel
   33. The hole made on the lower surface of the channel
4- Panel lower metal
   A. Roof panel
   B. Facade panel

### Description of the Invention

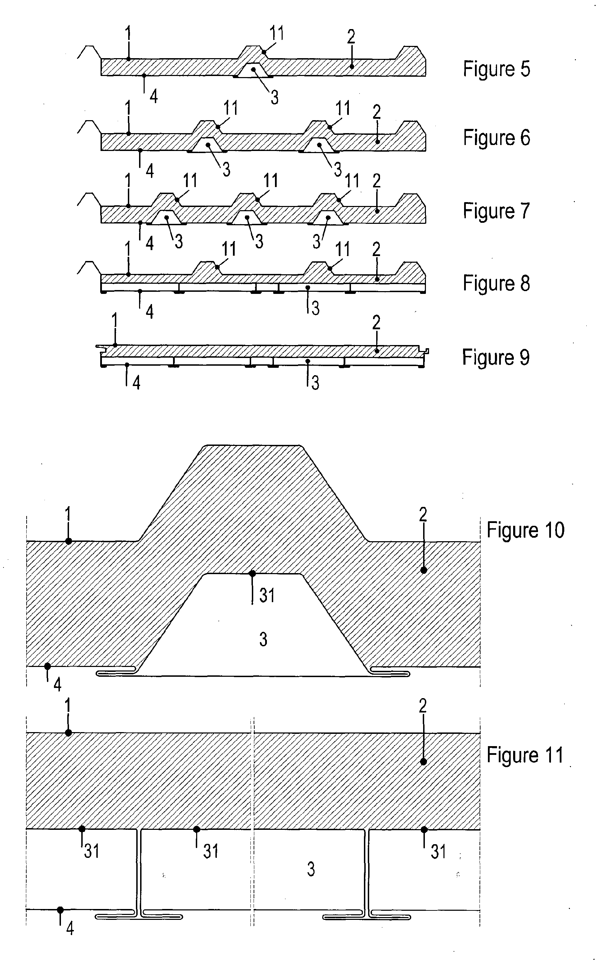

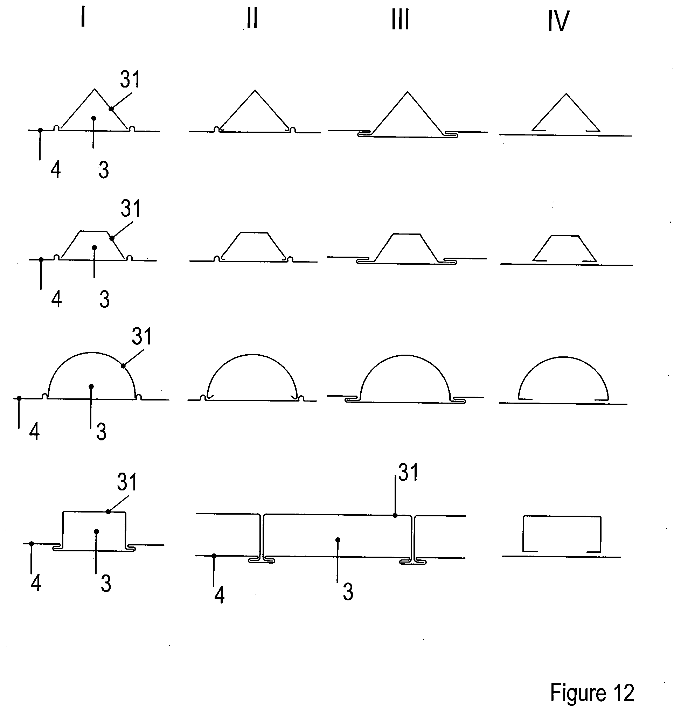

The inventive channel (3) is attached to the panel lower metal (4) inside the thicknesses of roof panel (A) and facade panel (B), it is present as one or more than one and continues uninterruptedly along the roof panel (A) and facade panel (B). The locations, forms and sizes of this channel (3) or channels (3) inside the roof panel (A) and facade panel (B) are formed considering valid technical calculation methods in this subject and purposes of use of the channels (3) (Figure 12). Each channel (3) is comprised of a channel upper metal (31), which is formed such that it will form a channel (3) inner cavity, and a part of panel lower metal (4) below tightly connected to the said channel upper metal (31). This connection can be cramp connection at the channel (3) edges of both two metals or adhesion from channel (3) edges or one freely fitting on to another (Figure 12). The channels (3) formed in this way are an indispensable part of roof panel (A) and facade panel (B). The channel upper metal (31) is connected with the panel lower metal (4) in this way and forms the channel (3); and it is adhered to the thermal insulation material (2) located on its upper part tightly, and makes the roof panel (A) and facade panel (B) (panel upper metal (1) + thermal insulation material (2) + channel upper metal (31) + channel (3) + panel lower metal (4)) a stronger composite material (Figure 10-11). The channel (3) shape is triangle, trapezoid, rectangle, square, semi-circle or their derivatives in sizes of required for its purpose of use and such that it will protect the channel (3) from outside factors (Figure 12).

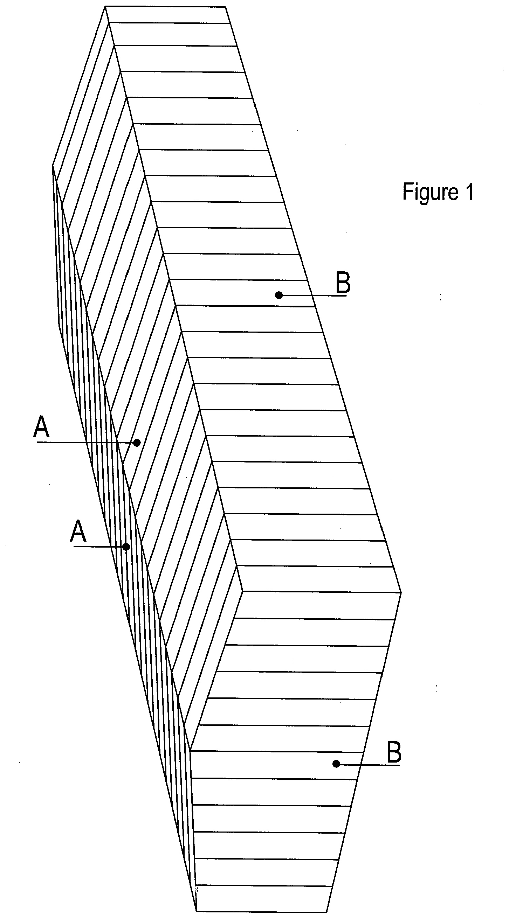

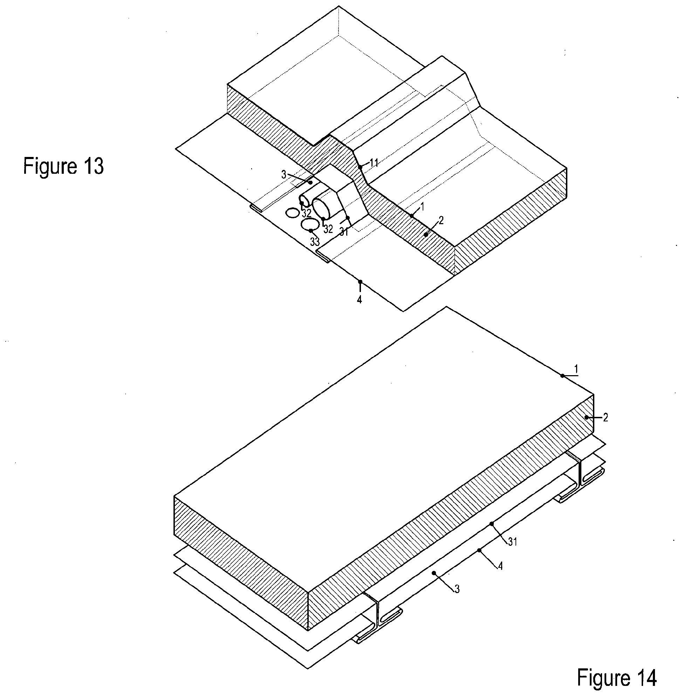

When the roof panel (A) and the facade panel (B) are put their places as roof and facing material, the channels (3) surround all interior along the roof panel (A) and facade panel (B) as they are attached to their inner surfaces (Figure 1). Holes (33) may be formed by perforating the panel lower metal (4) according to previous technique when it is shape of a roll such that they will correspond to the surfaces of channels (3) facing the interior, or they may be formed on the channel lower surface from required placed after roof panel (A) or facade panel (B) are manufactured such that they will be in a form and number which will not damage the carrying capacity of the roof panel (A) and facade panel (B). These holes (33) made on the channel lower surface can be for providing acoustic, decorative feature to inner surfaces of roof panel (A) and facade panel (B) by putting or without putting material with acoustic feature inside the channel (3), as well as they can be for inlets and outlets of the assembly (32) passing through the channel (3) related with cabling for fire extinguishing, cooling, heating, air conditioning or audio, visual, information, electric conduction (Figure 13). Both ends of the channels (3) allow inlet and outlet of related assembly when it is required; they are preferably closed with a metal cover suitable for the technique such that it will provide the desired protection. Therefore the channel (3) itself can be used as becoming a part of fire extinguishing or heating, cooling, air conditioning systems. For this, the places where the systems are connected to the channels (3) and go out of the channels (3) are detailed according to the technique.

Furthermore, the lower surface of the roof panel (A) and facade panel (B) is formed of channels (3) attached next to each other, their interiors are filled with highly fire resistant material, therefore the roof panel (A) and facade panel (B) are enabled to be classified as fire resistant materials (Figure 8, 9, 11, 14).

Even if there is only one channel (3) on each roof panel (A) and facade panel (B), when these roof panels (A) are put next to each other on the roof and the facade panels (B) are put next to each other on the facade, each one of the channels (3) thereon can be used for different purposes in accordance with the requirements of the interior. Therefore, for example by applying an arrangement pattern such as fire extinguishing/ air conditioning / cabling, all roof and facade surface surrounding the interior can become surrounded by channels (3) for the said requirements.

### The Industrial Applicability of the Invention

The manufacture of channel (3) or channels (3)to serve the abovementioned purposes can be incorporated into the production flow in continuous production lines wherein the roof panel (A) and facade panel (B), and it can also be applicable to the industry.

## Claims

1. A roof panel (A) comprising:
- a lower metal sheet (4) which is flat,
- an upper metal sheet (1), which is corrugated, wherein the corrugations of the upper metal sheet (1) are formed by a plurality of gutters (11),
- one or more channels (3) being provided on the lower metal sheet (4) and extending uninterruptedly along the direction of the long edge of the roof panel (A), the one or more channels (3) comprising a channel upper metal sheet (31) connected to the top of the lower metal sheet (4) such as to form a channel inner cavity, the one or more channels (3) being suitable for multi-purpose use,
- a thermal insulation material (2) being located on and tightly adhered to the upper surface of the channel upper metal sheet (31) of the one or more channels (3) and fully extending between the lower and upper metal sheets (1, 4) of the panel, except for the channel inner cavity of the one or more channels (3),
wherein the channel upper metal sheet (31) of at least one of the one or more channels is located under one of the plurality of gutters (11) and is placed at a distance from the upper metal sheet (1) of the panel with the thermal insulation material (2) extending in between,
wherein the tight connection between the upper metal sheet (1), the thermal insulation material (2), the channel upper metal sheet (31) and the lower metal sheet (4) allows for a stronger composite material with a higher load carrying capacity than the total of the load capacities of each
component taken separately, and
the roof panel further comprising:
- holes (33) which are made on the surface of the lower metal sheet (4) of the panel such as to face a channel inner cavity, said holes (33) being made in a suitable number, size and shape for inlet-outlet apparatuses or acoustic, decorative requirements depending on the purpose of use of the one or more channels (3).

2. A facade panel (B) comprising:
- a lower metal sheet (4) which is flat,
- an upper metal sheet (1) which is flat,
- one or more channels (3) being provided on the lower metal sheet (4) and extending uninterruptedly along the direction of the long edge of the facade panel (B), the one or more channels (3) comprising a channel upper metal sheet (31) connected to the top of the lower metal sheet (4) such as to form a channel inner cavity, the one or more channels (3) being suitable for multi-purpose use,
- a thermal insulation material (2) being located on and tightly adhered to the upper surface of the channel upper metal sheet (31) of the one or more channels (3) and fully extending between the lower and upper metal sheets of the panel, except for the channel inner cavity of the one or more channels (3),
wherein the channel upper metal sheet (31) of the one or more channels is placed at a distance from the upper metal sheet (1) of the panel with the thermal insulation material (2) extending in between,
wherein the tight connection between the upper metal sheet (1), the thermal insulation material (2), the channel upper metal sheet (31) and the lower metal sheet (4) allows for a stronger composite material with a higher load carrying capacity than the total of the load capacities of each
component taken separately, and the facade panel further comprising:
- holes (33) which are made on the surface of the lower metal sheet (4) of the panel such as to face a channel inner cavity, said holes (33) being made in a suitable number, size and shape for inlet-outlet apparatuses or acoustic, decorative requirements depending on the purpose of use of the one or more channels (3).

3. A panel according to Claim1 or Claim 2, **characterized by** the channel (3) which is formed in triangle, trapezoid, rectangle, square, semi-circle shapes or in shapes derived from these forms according to the purpose of use.

4. A panel according to Claim 1 or Claim 2, **characterized in that** the channels (3) are suitable for being used as a part of systems for the purpose of
- fire extinguishing,
- providing resistance against fire,
- heating, cooling, air conditioning,
- acoustics and decorative use,
- cabling for audio, light, visual, and information flow and electricity transmission;
or which allow the passage of the assembly related with these systems therein or the placement of materials with the acoustic or high fire resistance features therein.

5. A panel according to Claim 1 or Claim 2, **characterized in that** solutions for a plurality of purposes can be developed by means of channels (3) providing solutions in accordance with a plurality of requirements inside each one of the roof panels (A) and the facade panels (B), and which has the flexibility to form multi-requirement arrangement patterns even if there is only one channel (3) on each roof panel (A) and façade panel (B) and when the channels (3) in the roof and façade panels (A. B) are brought next to each other, each channel (3) being directed to a single purpose or to a plurality of purposes.

6. A panel according to Claim 1 or Claim 2, **characterized in that** the thermal insulation material (2) injected between the two metals sheets (4, 1) and tightly adhering to the metal surfaces is polyurethane or its derivative.

7. A panel according to Claim 1 or Claim 2, **characterized in that** the thermal insulation material (2) placed between the two metal sheets (4, 1) tightly adhering to the metal surfaces through hot adhesion technique is rock wool or its derivative.

8. A panel according to Claim 1 or Claim 2, **characterized by** the channel (3) which has covers enabling it to cover both ends when it is required.

9. A panel according to Claim 1 or Claim 2, **characterized by** the channel (3) which provides fire resistance to the panel (A or B) provided that it is filled with highly fire resistant material.

10. A panel according to Claim 1 or Claim 2, **characterized by the** lower metal sheet of the panel (4) which is also used as the lower metal layer of the channel (3) at the same time with its one part passing under the channel (3).

11. A panel according to Claim 1 used in inclined surfaces as roof panels (A).

12. A panel according to Claim 2 used in vertical surfaces as facade panels (B).

## Patentansprüche

1. Dachpaneel (A), umfassend:
- ein unteres Blech (4), das flach ist,
- ein oberes Blech (1), das gewellt ist, wobei die Wellen des oberen Blechs (1) durch eine Vielzahl von Rinnen (11) gebildet sind,
- ein oder mehrere Kanäle (3) die auf dem unteren Blech (4) vorgesehen sind und sich kontinuierlich entlang der Richtung der Längskante der Dachpaneel (A) erstrecken, der eine oder die mehreren Kanäle (3) ein oberes Kanalblech (31) umfassen, das mit der Oberseite des unteren Blechs (4) verbunden ist, um einen inneren Kanalhohlraum zu bilden, der eine oder die mehreren Kanäle (3) für eine Mehrzweckverwendung geeignet sind,
- ein Wärmeisoliermaterial (2), das auf der Oberseite des obere Kanalblechs (31) des einen oder der mehreren Kanäle (3) liegt und fest an dieser haftet und sich vollständig zwischen den unteren und oberen Blechen (1, 4) der Paneele erstreckt, mit Ausnahme des Kanalhohlraums des einen oder der mehreren Kanäle (3),
wobei das obere Kanalblech (31) von mindestens einem der einen oder mehreren Kanäle unter einer der Vielzahl von Rinnen (11) liegt ist und in einem Abstand von dem oberen Blech (1) der Paneele platziert ist, während sich das Wärmeisoliermaterial (2) dazwischen erstreckt,
wobei die feste Verbindung zwischen dem oberen Blech (1), dem Wärmeisoliermaterial (2), dem oberen Kanalblech (31) und dem unteren Blech (4) ein stärkeres Verbundmaterial ermöglicht mit eine höhere Tragfähigkeit als die Summe der Tragfähigkeiten jeder einzelnen Komponente, die separat betrachtet wird, und
die Dachpaneel weiterhin umfasst:
- Bohrungen (33), die auf der Oberfläche des unteren Blechs (4) von die Paneele so, dass sie einem inneren Kanalhohlraum zugewandt ist, wobei die Bohrungen (33) die folgenden sind in geeigneter Anzahl, Größe und Form für Einlass- und Auslassgeräte hergestellt werden oder akustische, dekorative Anforderungen je nach Verwendungszweck von den einen oder die mehreren Kanäle (3).

2. Fassadenpaneel (B), umfassend:
- ein unteres Blech (4), das flach ist,
- ein oberes Blech (1), das flach ist,
- ein oder mehrere Kanäle (3), die auf dem unteren Blech (4) vorgesehen sind und sich kontinuierlich entlang der Richtung der Längskante der Fassadenpaneel (B) erstrecken, der eine oder die mehreren Kanäle (3) ein oberes Kanalblech (31) umfassen, das mit der Oberseite des unteren Blechs (4) verbunden ist, um einen inneren Kanalhohlraum zu bilden, der eine oder die mehreren Kanäle (3) für eine Mehrzweckanwendung geeignet sind,
- ein Wärmeisoliermaterial (2), das auf der Oberseite des oberen Kanalblechs (31) des einen oder der mehreren Kanäle (3) liegt und fest an dieser haftet und sich vollständig zwischen den unteren und oberen Blechen der Paneele erstreckt, mit Ausnahme des inneren Kanalhohlraums des einen oder der mehreren Kanäle (3),
wobei das obere Kanalblech (31) des einen oder der mehreren Kanäle in einem Abstand von dem oberen Blech (1) der Paneele platziert ist, während sich das Wärmeisoliermaterial (2) dazwischen erstreckt,
wobei die enge Verbindung zwischen dem oberen Blech (1), dem Wärmeisoliermaterial (2), dem oberen Kanalblech (31) und dem unteren Blech (4) ein stärkeres Verbundmaterial ermöglicht mit eine höhere Tragfähigkeit als die Summe der Tragfähigkeiten jeder einzelnen Komponente, die separat betrachtet wird, und
die Fassadenpaneele weiterhin umfasst:
- Bohrungen (33), die auf der Oberfläche des unteren Blechs (4) von die Paneele so, dass sie einem inneren Kanalhohlraum zugewandt sind, wobei die Bohrungen (33) die folgenden sind in geeigneter Anzahl, Größe und Form für Einlass- und Auslassgeräte hergestellt werden oder akustische, dekorative Anforderungen je nach Verwendungszweck von den einen oder die mehreren Kanäle (3).

3. Paneel nach Anspruch 1 oder Anspruch 2, **gekennzeichnet durch** den Kanal (3), der in Dreiecks-, Trapez-, Rechteck-, Quadrat-, Halbkreis- oder in von diesen Formen abgeleiteten Formen je nach Verwendungszweck gebildet ist.

4. Paneel nach Anspruch 1 oder Anspruch 2, **dadurch gekennzeichnet, dass** die Kanäle (3) geeignet sind, als Teil von Systemen zum Zwecke,
- Feuerbekämpfung,
- Resistenz gegen Feuer,
- Heizung, Kühlung, Klimatisierung,
- akustische und dekorative Verwendung,
- Verkabelung für Audio-, Licht-, Bild- und Informationsfluss sowie Stromübertragung; oder die den Durchgang der mit diesen Systemen in Zusammenhang stehenden Baugruppe oder die Platzierung von Materialien mit den darin enthaltenen akustischen oder hohe Feuerbeständigkeitsmerkmale ermöglichen.

5. Paneel nach Anspruch 1 oder Anspruch 2, **dadurch gekennzeichnet, dass** Lösungen für eine Vielzahl von Zwecken mittels Kanälen (3) entwickelt werden können, die Lösungen gemäß einer Vielzahl von Anforderungen innerhalb jeder der Dachpaneele (A) und der Fassadenpaneele (B) vorsehen, und die die Flexibilität aufweist, Muster mit mehreren Anforderungen zu bilden, selbst wenn es nur einen Kanal (3) auf jeder der Dachpaneele (A) und Fassadenpaneele (B) gibt, und wenn die Kanäle (3) in den Dach- und Fassadenpaneelen (A. B) nebeneinander gebracht werden, jeder Kanal (3) auf einen einzigen Zweck oder auf eine Vielzahl von Zwecken gerichtet ist.

6. Paneel nach Anspruch 1 oder Anspruch 2, **dadurch gekennzeichnet, dass** das Wärmeisoliermaterial (2), das zwischen die beiden Blechen (4, 1) eingespritzt und fest mit den Metallflächen verklebt ist, Polyurethan oder dessen Derivat ist.

7. Paneel nach Anspruch 1 oder Anspruch 2, **dadurch gekennzeichnet, dass** das Wärmeisolierungsmaterial (2), das zwischen den beiden Blechen (4, 1) platziert ist, das durch Heißklebetechnik fest an den Metalloberflächen haftet, Steinwolle oder deren Derivat ist.

8. Paneel nach Anspruch 1 oder Anspruch 2, **gekennzeichnet durch** den Kanal (3), der Abdeckungen aufweist, die es ihm ermöglichen, beide Enden abzudecken, wenn es erforderlich ist.

9. Paneel nach Anspruch 1 oder Anspruch 2, **gekennzeichnet durch** den Kanal (3), der der Paneel (A oder B) Brandschutz bietet, vorausgesetzt, dass es mit hochfeuerfestem Material gefüllt ist.

10. Paneel nach Anspruch 1 oder Anspruch 2, **gekennzeichnet durch** das untere Blech der Paneel (4), das gleichzeitig als untere Metallschicht des Kanals (3) mit seinem einen Teil unter dem Kanal (3) hindurch verwendet wird.

11. Paneel nach Anspruch 1, die in schrägen Flächen als Dachpaneele (A) verwendet wird.

12. Paneel nach Anspruch 2, das in vertikalen Flächen als Fassadenpaneele (B) verwendet wird.

## Revendications

1. Panneau de toit (A) comprenant:
- une feuille métallique inférieure (4) qui est plate,
- une feuille métallique supérieure (1), qui est ondulée, dans laquelle les ondulations de la feuille métallique supérieure (1) sont formées par une pluralité de gouttières (11),
- un ou plusieurs canaux (3) étant prévus sur la feuille métallique inférieure (4) et s'étendant sans interruption dans la direction du bord long du panneau de toit (A), le ou les canaux (3) comprenant une feuille métallique supérieure du canal (31) reliée au sommet de la feuille métallique inférieure (4) de manière à former une cavité interne du canal, le ou les canaux (3) étant appropriés pour une utilisation à usages multiples,
- un matériau d'isolation thermique (2) étant situé sur la surface supérieure de la feuille métallique supérieure du canal (31) de l'un ou plusieurs canaux (3) et adhérant étroitement à celle-ci, et s'étendant complètement entre les feuilles métalliques inférieure et supérieure (1, 4) du panneau, sauf pour la cavité interne du canal de l'un ou plusieurs canaux (3),
dans laquelle la feuille métallique supérieure du canal (31) d'au moins l'un des un ou plusieurs canaux est située sous l'une de la pluralité de gouttières (11) et est placée à une distance de la feuille métallique supérieure (1) du panneau, le matériau d'isolation thermique (2) s'étendant entre elles,
dans laquelle la liaison étanche entre la feuille métallique supérieure (1), le matériau d'isolation thermique (2), la feuille supérieure du canal (31) et la feuille métallique inférieure (4) permet un matériau composite plus résistant avec une capacité de charge supérieure au total des capacités de charge de chaque composant pris séparément, et le panneau de toit comprenant en outre:
- des trous (33) qui sont réalisés sur la surface de la feuille métallique inférieure (4) du panneau de manière à faire face à une cavité interne du canal, lesdits trous (33) étant réalisés en un nombre, une taille et une forme appropriés pour des appareils d'entrée-sortie ou des exigences acoustiques, décoratives en fonction de l'utilisation d'un ou plusieurs canaux (3).

2. Panneau de façade (B) comprenant:
- une feuille métallique inférieure (4) qui est plate,
- une feuille métallique supérieure (1) qui est plate,
- un ou plusieurs canaux (3) étant prévus sur la feuille métallique inférieure (4) et s'étendant sans interruption dans la direction du bord long du panneau de façade (B), le ou les canaux (3) comprenant une feuille métallique supérieure du canal (31) reliée au sommet de la feuille métallique inférieure (4) de manière à former une cavité interne du canal, le ou les canaux (3) étant appropriés pour une utilisation à usages multiples,
- un matériau d'isolation thermique (2) étant situé sur la surface supérieure de la feuille métallique supérieure du canal (31) de l'un ou plusieurs canaux (3) et adhérant étroitement à celle-ci, et s'étendant complètement entre les feuilles métalliques inférieure et supérieure du panneau, sauf pour la cavité interne du canal de l'un ou plusieurs canaux (3),
dans laquelle la feuille métallique supérieure du canal (31) d'un ou plusieurs canaux est placée à une distance de la feuille métallique supérieure (1) du panneau, le matériau d'isolation thermique (2) s'étendant entre les deux,
dans laquelle la liaison étanche entre la feuille métallique supérieure (1), le matériau d'isolation thermique (2), la feuille métallique supérieure du canal (31) et la feuille métallique inférieure (4) permet un matériau composite plus résistant avec une capacité de charge supérieure au total des capacités de charge de chaque composant pris séparément, et
le panneau de façade comprenant en outre:
- des trous (33) qui sont réalisés sur la surface de la feuille métallique inférieure (4) du panneau de manière à faire face à une cavité interne du canal, lesdits trous (33) étant réalisés en un nombre, une taille et une forme appropriés pour des appareils d'entrée-sortie ou des exigences acoustiques, décoratives en fonction de l'utilisation d'un ou plusieurs canaux (3).

3. Panneau selon la revendication 1 ou la revendication 2, **caractérisé par** le canal (3) qui est formé en triangle, trapèze, rectangle, carré, demi-cercle ou en formes dérivées de ces formes selon le but d'utilisation.

4. Panneau selon la revendication 1 ou la revendication 2, **caractérisé en ce que** les canaux (3) sont appropriés pour être utilisés en tant que partie de systèmes dans le but de
- l'extinction d'incendie,
- offrant une résistance au feu,
- le chauffage, le refroidissement, la climatisation,
- l'acoustique et la décoration,
- le câblage pour le flux audio, lumineux, visuel et d'information et la transmission d'électricité ;
ou qui permettent le passage de l'ensemble lié à ces systèmes ou la mise en place de matériaux présentant des caractéristiques acoustiques ou de résistance au feu élevées.

5. Panneau selon la revendication 1 ou la revendication 2, **caractérisé en ce que** des solutions pour une pluralité d'usages peuvent être développées au moyen de canaux (3) fournissant des solutions selon une pluralité d'exigences à l'intérieur de chacun des panneaux de toit (A) et des panneaux de façade (B), et qui a la flexibilité de former des motifs d'agencement à exigences multiples même s'il n'y a qu'un seul canal (3) sur chaque panneau de toit (A) et panneau de façade (B) et lorsque les canaux (3) dans les panneaux de toit et de façade (A. B) sont placés l'un contre l'autre, chaque canal (3) étant dirigé vers un but unique ou vers une pluralité de buts.

6. Panneau selon la revendication 1 ou la revendication 2, **caractérisé en ce que** le matériau d'isolation thermique (2) injecté entre les deux feuilles métalliques (4, 1) et adhérant étroitement aux surfaces métalliques est du polyuréthane ou son dérivé.

7. Panneau selon la revendication 1 ou la revendication 2, **caractérisé en ce que** le matériau d'isolation thermique (2) placé entre les deux feuilles (4, 1) adhérant étroitement aux surfaces métalliques par la technique d'adhérence à chaud est de la laine de roche ou son dérivé.

8. Panneau selon la revendication 1 ou la revendication 2, **caractérisé par** le canal (3) qui présente des couvercles lui permettant de couvrir les deux extrémités lorsqu'il est nécessaire.

9. Panneau selon la revendication 1 ou la revendication 2, **caractérisé par** le canal (3) qui assure la résistance au feu du panneau (A ou B) à condition qu'il soit rempli de matériau hautement résistant au feu.

10. Panneau selon la revendication 1 ou la revendication 2, **caractérisé par** la feuille métallique inférieure (4) du panneau qui est également utilisée comme couche métallique inférieure du canal (3) en même temps que son une partie passe sous le canal (3).

11. Panneau selon la revendication 1 utilisé dans les surfaces inclinées comme panneau de toit (A).

12. Panneau selon la revendication 2 utilisé dans les surfaces verticales comme panneau de façade (B).
